**Europäisches Patentamt**

**European Patent Office**

**Office européen des brevets**

(19)

(11) Veröffentlichungsnummer: **0 306 689 B1**

# EUROPÄISCHE PATENTSCHRIFT

(12)

(45) Veröffentlichungstag der Patentschrift:
08.05.91 Patentblatt 91/19

(51) Int. Cl.⁵: **F16L 33/22, B29C 45/14,** **F16L 47/00**

(21) Anmeldenummer: 88112200.6

(22) Anmeldetag: 28.07.88

(54) **Gas- und flüssigkeitsdichte Verbindung I.**

(30) Priorität: 05.09.87 DE 8712046 U

(43) Veröffentlichungstag der Anmeldung:
15.03.89 Patentblatt 89/11

(45) Bekanntmachung des Hinweises auf die
Patenterteilung:
08.05.91 Patentblatt 91/19

(84) Benannte Vertragsstaaten:
DE FR IT NL SE

(56) Entgegenhaltungen:
DE-C- 3 246 768
US-A- 4 403 922

(73) Patentinhaber: ROBERT BOSCH GmbH
Postfach 10 60 50
W-7000 Stuttgart 10 (DE)

(72) Erfinder: Beck, Siegfried
Stöfflerweg 8
W-7000 Stuttgart 80 (DE)
Erfinder: Deja, Siegmund
Schrozberger Strasse 20
W-7000 Stuttgart 40 (DE)
Erfinder: Gassmann, Heiner
Jakobstrasse 3
W-7300 Esslingen 1 (DE)
Erfinder: Gollub, Heinz
Forststrasse 80
W-7000 Stuttgart 1 (DE)
Erfinder: Graetz, Uwe
Sachsenheimer Strasse 48/1
W-7122 Besigheim (DE)
Erfinder: Rönnefarth, Klaus
Hattenbühl 33
W-7000 Stuttgart 30 (DE)

## Beschreibung

### Stand der Technik

Die Erfindung bezieht sich auf eine gas- und flüssigkeitsdichte Verbindung nach der Gattung des Anspruchs. Eine derartige Verbindung ist bekannt (DE-C- 32 46 768).

Der bekannten Verbindung liegt das Problem zugrunde, daß es wegen der bei Temperaturwechsel unterschiedlichen Ausdehnung von Kunststoff und Metall zur Spaltbildung kommt, die von einer O-Ringdichtung überbrückt werden muß. Bei der bekannten Bauart ist ein Ausweichvolumen vorgesehen, in das die O-Ringdichtung bei Materialverdrängung eindringen kann. Eine solche Wirkungsweise hat aber den Nachteil, daß durch den Spritzdruck keine definierte Vorspannung des O-Ringes erreicht wird.

Außerdem kann sich beim Abkühlen der Spritzmasse an der Berührungsfläche O-Ring/Kunststoff durch den dort entstehenden Wärmestau eine porige Oberfläche bilden.

Das Zusammenwirken von ungenügender Vorspannung und poriger Dichtfläche führt bei ungünstigen Verhältnissen zu Undichtigkeiten.

### Vorteile der Erfindung

Die einleitend angesprochene gas- und flüssigkeitsdichte Verbindung mit den kennzeichnenden Merkmalen des Anspruchs hat demgegenüber den Vorteil, daß sie bei allen Temperaturbereichen eine absolut gute Dichtung bewirkt und daß diese Dichtheit auch bei Schwinden des Kunststoffmaterials erhalten bleibt. Außerdem ist die vorgeschlagene Lösung auch sehr kostengünstig.

### Zeichnung

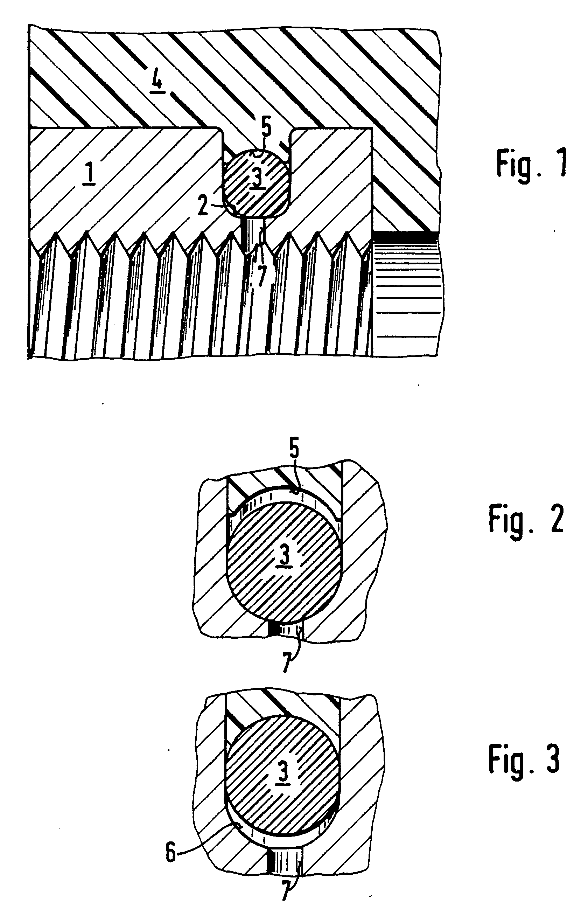

Ein Ausführungsbeispiel der Erfindung ist in der Zeichnung dargestellt und in der nachfolgenden Beschreibung näher erläutert. Es zeigen : Figure 1 die Verbindung als Ganzes im Schnitt, Figure 2 die O-Ringdichtung bei druckloser Einrichtung und Figure 3 die O-Ringdichtung unter Druck.

### Beschreibung des Ausführungsbeispieles

Ein rotationssymmetrischer Metallkörper 1 ist als Gewindestück ausgebildet und ist mit einer Ringnut 2 versehen, in die eine O-Ringdichtung 3 mit axialer und radialer Vorspannung eingelegt ist. Der Metallkörper 1 ist vom Kunststoffkörper 4 umspritzt, wobei die O-Ringdichtung 3 mit verspritzt ist und sich im Kunststoff ein Bett 5 für die O-Ringdichtung 3 bildet. Dabei verhindert die axiale Vorspannung der O-Ringdichtung 3 ein Eindringen des fließenden Kunststoffes in einen Nutgrund 6 der Ringnut 2 des Metallkörpers 1.

Der Metallkörper ist ausgehend vom Nutgrund 6 mit mindestens einem radialen Druckmittelkanal 7 versehen. Durch diesen Druckmittelkanal 7 wird Druckmittel von einer nicht dargestellten Druckmittelquelle zum Nutgrund 6 geleitet. Dadurch wird bei Druckmitteleinwirkung die O-Ringdichtung 3 dichtend in ihr Bett 5 gedrückt. Dies ist in der Figur 3 zu erkennen.

Ein Ausströmen von Druckmittel durch die Metall-Kunststoffverbindung hindurch ist mit Sicherheit vermieden.

## Ansprüche

1. Gas- und flüssigkeitsdichte Verbindung zwischen einem rotationssymmetrischen Metallkörper (1) und einem ebensolchen Kunststoffkörper (4), wobei der Metallkörper (1) vom Kunststoff des Kunststoffkörpers (4) umspritzt ist und als Dichtelement zwischen den beiden Körpern eine im Querschnitt runde O-Ringdichtung (3) vorgesehen ist, die vor dem Spritzvorgang in eine Ringnut (2) des Metallkörpers (1) eingesetzt ist, und mit diesem zusammen umspritzt ist, wobei beim Spritzvorgang die Kunstoffmasse in die Ringnut eindringt und sich von außen an die O-Ringdichtung (3) anpaßt, dadurch gekennzeichnet, daß im Nutgrund (6) des Metallkörpers (1) in an sich bekanner Weise mindestens ein radialer Durckmittelkanal (7) vorgesehen ist und daß der beim Vergießen in die Ringnut (2) eindringende, sich der Form der O-Ringdichtung (3) anpassende Kunststoffkörper (4) und der Nutgrund (6) des Metallkörpers (1) je ein gleichgeformtes Bett (5 bzw. 7) für die sich bei wechselnder Druckeinwirkung einmal am Kunststoff-Bett und einmal am Nutgrund-Bett anlegende O-Ringdichtung (3) bildet.

## Claims

1. Gas and fluid tight connection between a rotationally symmetrical metal body (1) and just such a plastic body (4), the metal body (1) being surrounded by the injection-moulded plastic of the plastic body (4) and there being provided as sealing element between the two bodies a cross-sectionally round o-ring seal (3), which is inserted before the injection-moulding operation into an annular groove (2) of the metal body (1) and is surrounded together with the latter during injection moulding, the plastic melt penetrating into the annular groove and conforming externally to the o-ring seal (3) during the injection-moulding operation, characterised in that at least one radial pressure medium channel (7) is provided in a way known per se in the groove base (6) of the metal body (1), and in that the plastic body (4), penetrating into the annular groove (2) during moulding and conforming to the shape of the o-ring seal (3), and the groove base (6) of the metal body (1) each form a similarly shaped bed (5 and 7, respectively) for the oring seal (3) bearing at one time against the plastic bed and at one time against the groove-base bed under the alternating effect of pressure.

## Revendications

1. Raccord étanche aux gaz et aux liquides entre un corps métallique autour d'un axe de rotation et un corps en matière plastique (4) ou en matériau équivalent, où le matériau métallique est couvert par extrusion par le matériau plastique du corps en matière plastique (4), et où on a prévu un joint torique à section transversale circulaire comme élément d'étanchéité entre les deux corps, joint qui avant la phase d'injection a été inséré dans une rainure circulaire (2) du corps métallique (1), et a été recouvert par extrusion en même temps que ce dernier, où pendant la phase de moulage, le matériau plastique pénétré dans la rainure circulaire, et de l'extérieur, s'adapte en se moulant sur le joint torique 3, caractérisé en ce que, dans la base de la rainure (6) du corps métallique (1), on a prévu au moins un canal radial transmetteur de pression (7), de façon connue en elle-même, et que le corps en matériau plastique (4) qui s'adapte en se moulant sur la forme du joint torique (3) lorsqu'il se répand en pénétrant dans la rainure circulaire (2), et que la base de la rainure (6) du corps métallique (1) forme respectivement une empreinte équivalente (5 ou 7) pour le joint torique (3) sous l'effet d'une pression alternative tantôt du côté de l'empreinte, sur le matériau plastique, et tantôt du côté de l'empreinte sur la base de la rainure.

Fig. 1

Fig. 2

Fig. 3